**Europäisches Patentamt**

**European Patent Office**

**Office européen des brevets**

(19)

(11) Publication number: **0 050 603**
A2

# EUROPEAN PATENT APPLICATION

(12)

(21) Application number: **81850180.1**

(22) Date of filing: **07.10.81**

(51) Int. Cl.³: **G 01 V 3/08**

(30) Priority: **13.10.80 GB 8032961**

(43) Date of publication of application: **28.04.82**
**Bulletin 82/17**

(84) Designated Contracting States: **AT BE CH DE FR IT LI NL SE**

(71) Applicant: **Landström, Sven, Fjällgatan 16, S-116 45 Stockholm (SE)**

(72) Inventor: **Landström, Sven, Fjällgatan 16, S-116 45 Stockholm (SE)**

(74) Representative: **Norén, Per Bo Arne, SWEDPATENT AB P.O. Box 21021, S-100 31 Stockholm 21 (SE)**

(54) **A device for locating a submerged submarine.**

(57) A device for locating a submerged submarine includes a magnetic device supplying a magnetic field for adherence of the device against the external structure of a submarine, the magnetic device comprising at least two magnets (2, 3) located adjacent to each other and having co-acting magnetic fields, and a magnetically operated switching means (4) within the magnetic field provided by the magnets, the switching means being responsive to a change in the magnetic field due to the introduction of a metal mass into the field to actuate a source (11) of an acoustic signal.

- 1 -

## A device for locating a submerged submarine

The present invention relates to a device for use in locating a submerged submarine and continously determining and indicating the location of the submarine.

It is previously known to use devices, incorporating an acoustic source, arranged to adhere to the external structure of a submarine by means of magnetic force from a powerful magnet included in the device. When the device takes up contact with the external structure of the submarine, a switch actuator extending through the wall of the device adjacent to the magnet is depressed relative to the housing of the device, thereby actuating the sound source. The acoustic signals emitted from the sound source makes it possible to locate and follow the submarine, and is used as a harmless means for determination whether or not a suspected contact is a submarine, and if so, as a means for exact location of the submarine, e.g. when depth charges are used. However, when the above type of devices are cast from a ship or an aircraft into an area where a submerged submarine is suspected, the device may adhere to small metallic objects located on the bottom, whereby the switch actuator is depressed and the acoustic source indicates a stationary submerged submarine. Also other objects such as stones or rocks can depress the switch actuator protruding through the wall of the device, and cause transmission of signals, even though no submarine has been located. The previously known type of device must also be kept away from all steel and from objects before launching, since the acoustic transmitter would be actuated if the magnetic surface of the device takes up contact

with such an object.

The object of the present invention is to disclose a device for use in locating a submerged submarine, which does not transmit any acoustic signals if not adhered to the external structure of a submerged submarine. Accordingly, it can be placed on a steel surface, before launch, and the signal source is not affected when the device takes up contact with the bottom surface, or small metallic objects located by the bottom surface, e.g. sheet metal cans or lids. Furthermore, there are no movable members extending outwardly from the wall of the device, which could be deformed and cause malfunction.

According to one aspect of the present invention, there is provided a device to be launched by a ship or an aircraft, including an acoustic signal source and two magnets with a co-acting magnetic field and a magnetically operated switching means, surrounded by a casing. When the magnets adhere to an object with magnetic properties having a mass exceeding a predetermined minimum value, such as the external structure of a submarine, said mass co-acts with the magnetic field of the two magnets in such a way, that the switching means is actuated, thereby initializing the signal source into a transmitting stage.

According to a second aspect of the invention, there is provided an electrical circuit between two parts of the casing, to be closed when the device is submerged by the surrounding water, said circuit acting as a switching circuit to be closed by the water surrounding the casing when submerged and being connected to the magnetically operated switching means in such a way, that the signal source is only operated provided that both the switching circuit formed between two parts of the casing and the magnetically operated switching means are actuated.

According to a third aspect of the invention, there is provided continously monitoring of the depth of the device, i.e. with regard to the pressure of the water surrounding the device, and the depth monitoring device is arranged to influence the acoustic

- 3 -

0050603

signal source in such a way, that the frequency of the transmitted signal and/or the characteristics of a transmitted pulse train is altered on basis of variations made with regard to the depth of a submerged submarine to which the device adheres.

One embodiment of the invention will now be more particularly described, by way of example, with reference to the accompanying drawing, in which:-

Figure 1 is a cross-sectional view of a device according to the present invention,
Figure 2 shows how the device is launched from a helicopter against a submarine, and
Figure 3 shows how a ship uses the transmitted signals from the device to locate a submerged submarine.

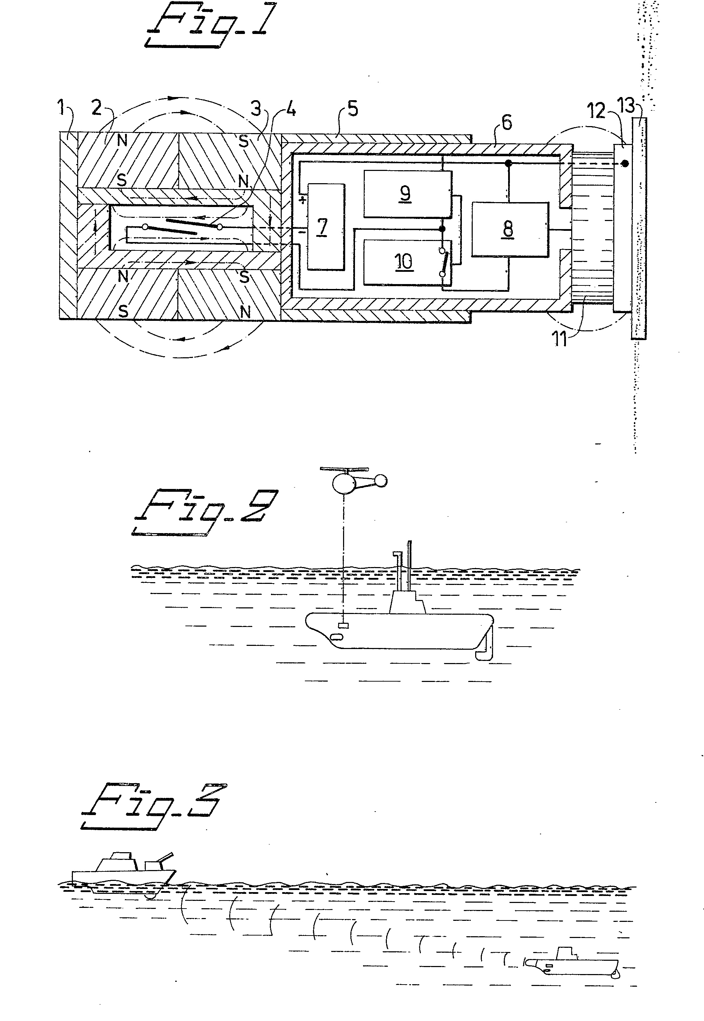

Referring first to Figure 1, there is shown a device including a nose plate 1, located adjacent to two magnets, 2 and 3, of permanent type. As indicated by N and S, denominating the magnetic north and south poles, said magnets 2, 3 are located turned $180^{o}$ in relation to each other, and the magnetic fields thus achieved are indicated in broken lines. Surrounded by the magnets 2, 3, and centrally located in relation to same, a switch means 4 is arranged, preferably a magnetic reed switch including two tongues, arranged to move under the influence of an applied magnetic field or changes in an applied magnetic field. From the magnets 2, 3 extends a tubular outer housing 5, embracingly surrounding an inner housing 6, in which a battery 7, an oscillator 8, an impulse duration circuit 9 and an electronic switching means 10 is located at the end portion of the inner housing 6 opposed to the magnets 2, 3. At the free end portion of the oscillating member 11 is an electrical contact member 12 arranged in an intermediate position between the oscillating member 11 and a flexible guiding member 13.

The oscillating member 11 is manufactured from an electrically non-conductive material, whereby the electrical contact member 12 attached to same is electrically insulated from the inner and outer housing, 5 and 6 respectively. As shown in the schematical wiring diagram included in Figure 1, one pole of the battery 7 is directly connected to the electrical contact member 12, and none of the circuits 8, 9 can thus be actuated, unless an electrical circuit is established between the inner or outer casing, 5 and 6 respectively, and the electrical contact member 12. Such an electrical circuit between the contact member 12 and the inner housing 6 is indicated by broken lines, and would be caused by the water surrounding the device when immersed.

When the device is in a non-activated state, as shown in Figure 1, the magnetic fields from the two magnets 2, 3 counteract each other, and do not affect the surrounded tongue switch 4. However, when a metallic object is located adjacent to the magnets 2, 3, the location of the fields are altered, and as a result, the tongue switch 4 is operated, i.e. the tongues are closed.

Should the above actuated condition take place when the device is not immersed in water, i.e. due to the fact that the device is placed adjacent or in contact with a metallic object, the oscillator 8 and associated circuits would not be influenced, since the electrical circuit from the battery 7 would be interrupted at the electrical contact member 12. Accordingly, full security is achieved against actuation of oscillator 8 and related circuits before launch into a submerged location.

By locating the tongue switch element 4 in desired rotary position around the length axis in relation to the magnets 2, 3 and thus the magnetic fields from same, the sensitivity of the tongue switch element 4 can be preset with regard to sensitivity for alterations in the fields. This feature makes it possible to preset the device for a certain mass of steel, iron or similar, to be located adjacent to the magnets 2, 3, before influencing the tongue switch element 4. Accordingly, it is thus possible to locate the tongue switch element 4 in such a position in relation to the magnets 2, 3 that small metallic objects, having a mass less than a predetermined minimum mass, does not influence the tongue switch element 4. Small metal scrap objects, adhered to

0050603

the device, do not actuate the tongue switch element 4, and thus not the oscillator 8, whereby maximum security is achieved with regard to false transmissions, caused by such objects in the water. This fact makes it also impossible for the submarine to avoid contact by ejecting a large number of small strip metall parts, intended to actuate several of the devices dropped from a ship or an aircraft.

The above described device can be dropped from an airdraft, e,g, a helicopter as shown in Figure 2, or be ejected from a ship. As soon as a device takes up contact with the external structure of a submarine, the tongue element switch 4 is closed, and since the electrical circuit from the electrical contact member 12 is closed by the surrounding water, the electronic switching means 10 is operated, whereby the oscillator 8 and the impulse duration circuit 9 are operative. The oscillator 8 causes the oscillating member 11 to vibrate with a corresponding frequency, which can be traced in a conventional manner, as shown in Figure 3. In order to maintain the device operative for a maximum period of time, the impulse duration circuit 9 can be utilized to restrict transmission to certain intervals of time, with interruptions having a predetermined length of time.

However, the device according to the present invention can be further modified, in order to improve same. When a submarine has been located with the device, it is often desirable to obtain information relating to the present depth, e.g. to faciliate settings related to depth charges. This object can be achieved by incorporating a pressure sensitive gauge means in the device, arranged communicating with the surrounding water, when the device is immersed. The continously monitored pressure can be transformed into variations in time limits governing the impulse duration circuit 9, e.g. impulse length or repetition frequency. Accordingly, this modification provides continous information relating to the present depth of a submarine, to which a device is attached.

The above described embodiment, and related modification, are only intended to serve as an example of an embodiment within the scope of the present invention, since many modifications obviously are possible, while maintaining the characteristic features disclosed. Accordingly, devices can be arranged without the external electrical circuit, intended to be less expensive to manufacture, and the external circuit can also be replaced by other types of switching circuits, manually triggered before launch, or triggered when launched or when contacting the water surface. The outside configuration of the device can also be altered in a number of ways, and the flexible guiding member 13, used to guide the device after launch, can also be replaced by other types of guiding members.

The device may also include a cartridge of a colouring substance or liquid, to be ejected continuously or at intervals of time, when the device has made contact with a submerged submarine. Such a device would simplify contact with the submarine from an aircraft, and would also facilitate visual indication of the direction of travel taken by the submarine.

Finally, the device may be further modified, in order to secure adherence against the external surface of a submerged submarine, travelling at a relatively high speed. By introducing a small rocket propulsion charge in the device, having at least one exhaust nozzle for the combustion gases, directing the gas jet(s) away from the magnets 2, 3. When the device takes up a position in which the switch element 4 is operated, the rocket propulsion charge is ignited. The resulting rocket propulsion force is thus used as an additional force, acting to force the device into complete adherence with the external surface of the submarine, and the time necessary for taking up this position is thus reduced.

Since the rocket propulsion force is only used as an additional force, intended to orientate the device in a position of complete adherence from a first contact position, the rocket propulsion charge can be very small, having an extremely short combustion time, typically less than 0,1 second.

- 1 -

0050603

Claims:

1. A device for use in locating a submerged submarine, including an acoustic signal source (8, 11) and a magnetic device (2, 3) supplying a magnetic field for adherence against the external structure of a submarine, characterised in that said magnetic device (2, 3) comprises at least two magnets (2, 3) located adjacent to each other and having co-acting magnetic fields, a magnetically operated switching means (4) being arranged within the magnetic field provided by said magnets (2, 3), said magnetically operated switching means (4) being operated when the magnetic field is changed by introduction of a metal mass into same, the operation of said magnetically operated switching means (4) being arranged to actuate the acoustic signal source (8, 11).

2. A device as claimed in claim 1, in which the magnetic device comprises two magnets (2, 3) of permanent type, located adjacent to each other and with the magnetic poles reversed in relation to each other, said magnets (2, 3) surrounding the magnetically operated switching means (4).

3. A device as claimed in claim 1 or 2, in which the magnetically operated switching means (4) is enclosed within a metal casing, said casing being used to distribute the magnetic flux from the magnets.

4. A device as claimed in any of claims 1 - 3, in which the magnetically operated switching means (4) is arranged rotatable in relation to the magnetic field supplied by the magnets (2, 3) into desired angular relationship to said magnetic field, in order to facilitate adjustment of the operational sensitivity of the magnetically operated switching means (4) with regard to the metal mass that must be introduced into the magnetic field to cause operation of the switching means (4).

5. A device as claimed in any of claims 1 - 4, in which the device includes a second switching means (12) to be operated in connection with the launch of the device, non-operation of said second switching means (12) preventing actuation of the acoustic signal source (8, 11) when the device is placed adjacent to a metal object before launch.

6. A device as claimed in claim 5, in which the second switching means (12) is formed by two portions of the external structure of the device, electrically insulated from each other, arranged to be electrically connected to each other by means of the water surrounding the device after launch.

7. A device as claimed in any of claims 1 - 6, in which the device includes a pressure sensitive device, arranged to monitor the water pressure surrounding the device when immersed, said pressure sensitive device being connected to the acoustic signal source (8, 11), arranged to alter the signal output characteristics on basis of monitored pressure, whereby the signals serve as an indication of the present depth of the submarine to which the device is attached.

8. A device as claimed in any of claims 1 - 7, in which the device includes a means (9) for actuating the acoustic signal service during predetermined periods of time and with predetermined interval periods.

9. A device as claimed in any of claims 1 - 8, in which the device includes a means for ejecting a colouring substance or liquid into the water when the device has taken up contact with the outer structure of a submerged submarine.

10. A device as claimed in any of claims 1 - 9, in which the magnets (2, 3) are located adjacent to one end portion of the casing (5, 6) of the device, the opposed end portion being arranged with flexible guiding member (13), extending mainly transversely in direction to the length axis of the device when in unflexed position.

11. A device as claimed in any of claims 1 - 10, in which a rocket propulsion charge is arranged in the device, having at least one exhaust nozzle directed away from the magnets (2, 3), arranged to be ignited when the magnetically operated switching means (4) is operated and to impose a rocket propulsion force on the device, forcing the magnets (2, 3) into contact with the outer surface of the submarine.

0050603

*Fig.1*

*Fig.2*

*Fig.3*